# EUROPÄISCHE PATENTANMELDUNG

(11) **EP 1 243 816 A2**
(43) Veröffentlichungstag der Anmeldung: **25.09.2002**
(21) Anmeldenummer: 02006517.3
(22) Anmeldetag: 18.03.2002
(51) Int. Cl.: F16H 59/02

(54) **Stufenwahleinrichtung für ein automatisches Getriebe**

(30) Priorität: 20.03.2001 DE 10113534
(71) Anmelder: Cherry GmbH, 91275 Auerbach (DE)
(72) Erfinder: Schober, Thomas, 92256 Hahnbach (DE); Bauer, Günter, 92237 Sulzbach-Rosenberg (DE)
(74) Vertreter: Leske, Thomas, Dr.

(57) **Zusammenfassung**

Erfindungsgemäß umfaßt eine Kulissenschalteinheit zur Erzeugung von Gangschaltsignalen für ein automatisches Schaltgetriebe eine Abdeckung der Kulissenschalteinheit, eine in der Abdeckung befindliche Kulisse, die Verschiebe- und/oder Schwenkbewegungen in eine Längs- und eine Querrichtung in der Ebene der Kulissenschalteinheit zuläßt, einen in der Kulisse geführten, in die Längs- und in die Querrichtung verschiebbaren und/oder schwenkbaren Wählhebel, ein mit der Abdeckung verbundenes Gehäuse oder Trägerteil, und elektrische Schalterelemente (z.B. Schleifbahnen und Schleifkontakte oder Mikroschalter), wobei die elektrischen Schalterelemente elektrische Gangschaltsignale entsprechend der Verschiebung des Wählhebels erzeugen, die zur Steuerung des automatischen Schaltgetriebes verwendet werden. Eine Besonderheit der erfindungsgemäßen Kulissenschalteinheit besteht jedoch darin, daß die elektrischen Schalterelemente (z.B. Schleifbahnen und Schleifkontakte oder Mikroschalter) unmittelbar auf einem mit dem Gehäuse oder mit dem Trägerteil verbundenen, leitenden Element in Form einer Leiterplatte oder einer Leiterfolie angeordnet sind.

## Beschreibung

Die vorliegende Erfindung betrifft eine Kulissenschalteinheit zur Erzeugung von Steuerungssignalen, insbesondere eine Kulissenschalteinheit zur Erzeugung von Gangschaltsignalen für ein automatisches Schaltgetriebe.

Aus dem Stand der Technik sind unterschiedliche Schalteinheiten zur Erzeugung von Steuerungssignalen für ein automatisches Schaltgetriebe mittels Wählhebels bzw. Wählwelle oder Auslösehebels bekannt. Es stehen dabei unterschiedliche, mit den jeweiligen Schalteinheiten zu lösende technische Aufgaben in Vordergrund.

Die Druckschrift DE 40 39 842 C1 offenbart z.B. eine Schalteinheit, die geeignet ist, die Position des Wählhebels genau zu erfassen. Diese Aufgabe wird gemäß DE 40 39 842 C1 dadurch gelöst, daß ein Potentiometer zur Erfassung der Position des Wählhebels verwendet wird, wobei das Potentiometer mit einem Tastschalter kombiniert ist, der durch eine mit dem Wählhebel verbundene Rastenscheibe betätigt wird. Eine besonders kompakte Ausführung dieser Erfindung soll sich dann ergeben, wenn das Potentiometer direkt an der Rastenscheibe angeordnet ist.

Ein wesentlicher Nachteil der Schalteinheit gemäß DE 40 39 842 C1 besteht darin, daß die Bewegung des Wählhebels nur eindimensional bzw. schwenkbar um die Wählwelle erfolgt. Dabei ist die Zahl der Steuerungsfunktionen, die mit dem Wählhebel ausgeführt werden können, wesentlich geringer als im Fall eines zweidimensional bewegbaren Hebels. Darüber hinaus bedarf die Herstellung der in der DE 40 39 842 C1 beschriebenen Schalteinheit auch eines großen Aufwands an Arbeitskraft und materiellen Ressourcen. Der Grund dafür ist nicht nur die relativ komplizierte Ausführung des mechanischen Teils der Schalteinheit, sondern auch die Notwendigkeit einer aufwendigen Verkabelung von Schaltern mit Elementen der Auswerteelektronik, welche für die Auswertung der in der Schalteinheit erzeugten Signale bestimmt ist.

Eine weitere Schalteinheit zur Erzeugung von Steuerungssignalen für ein automatisches Schaltgetriebe ist in der Druckschrift EP 0 807 771 A1 offenbart. Ein Vorteil dieser Schalteinheit besteht darin, daß die Erfassung der Position des Auslösehebels und die

Auslösung eines entsprechenden Steuerungssignals mit Hilfe einer Schleifkontaktanordnung erfolgt, welche im Gehäuse der Schalteinheit untergebracht sind, wobei das Kontaktieren der Schleifkontakte in Übereinstimmung mit einer Umstellung der Position des Auslösehebels stattfindet. Diese Ausführung der Schalteinheit gemäß EP 0 807 771 A1 führt zu einer verbesserten Toleranz bei der Erfassung der Position des Auslösehebels bzw. führt zur Vermeidung von Messungen in sogenannten Übergangsbereichen. Die in der EP 0 807 771 A1 offenbarte Schalteinheit hat jedoch auch Nachteile. Ein wesentlicher Nachteil der Schalteinheit gemäß besteht darin, daß die Bewegung des Wählhebels nur eindimensional, und zwar schwenkbar um die Wählwelle erfolgt. Dadurch ist die Zahl der mit einem Wähl- bzw. Auslösehebel auszuführenden Steuerungsfunktionen wesentlich geringer als im Fall eines zweidimensional bewegbaren Wählhebels. Darüber hinaus erfordert die Herstellung der in der EP 0 807 771 A1 beschriebenen Schalteinheit auch eines großen Aufwands.

Aus der Druckschrift DE 196 10 766 A1 ist eine Kulissenschalteinheit bekannt, welche einige wesentliche Nachteile der obengenannten Schalteinheiten beseitigt. Dies wird dadurch erreicht, daß die Kulissenschalteinheit gemäß DE 196 10 766 A1 einen Handwählhebel aufweist, welcher sich in einer T-förmigen Kulisse in eine Längs- und in eine Querrichtung relativ zur Kulissenschalteinheit bewegen läßt. Durch in der DE 196 10 766 A1 offenbarte Kulissenschalteinheit ist damit die Möglichkeit geschaffen worden, neben den für die automatischen Schaltgetriebe üblichen Wählhebel-Stellungen (P, R, N und D) zusätzliche Stellungen (etwa D+ und D-) zu schaffen bzw. eine zusätzliche Funktion der manuell-sinnfälligen Schaltung der Vorwärtsgänge einzuführen.

Ein wesentlicher Nachteil dieser Kulissenschalteinheit ist die aufwendige Gestaltung des mechanischen Schalterteils, sowie die Notwendigkeit einer Verkabelung der Schalterelemente der Kulissenschalteinheit, mit Elementen der Auswerteelektronik zwecks Auswertung der erzeugten Signale. Ein weiterer Nachteil der in der DE 196 10 766 A1 offenbarten Kulissenschalteinheit besteht darin, daß die Zusatzfunktionen, die über die für automatische Schaltgetriebe üblichen Funktionen (entsprechend den Wählhebel-Stellungen P, R, N und D) hinausgehen, nur auf die Funktion einer manuellen Schaltung der Vorwärtsgänge (entsprechend den Wählhebel-Stellungen D+ und D-) beschränkt sind.

Es ist damit die Aufgabe der vorliegenden Erfindung, eine Schalteinheit mit kompakter Bauweise zu schaffen, die trotzt des geringen Platzbedarfs eine zuverlässige Erfassung der Stellung des in der Schalteinheit enthaltenen Wählhebels zuläßt.

Es ist auch Aufgabe der vorliegenden Erfindung, eine Schalteinheit vorzustellen, welche die Notwendigkeit einer aufwendigen Verkabelung von Schalterelementen der Schalteinheit mit Elementen der Auswerteelektronik vermeidet und dadurch eine einfache Montage der Schalteinheit zuläßt. Es ist ferner Aufgabe der vorliegenden Erfindung, eine Schalteinheit vorzustellen, welche eine Reihe von zusätzlichen Schaltfunktionen zuläßt, die über die üblichen Schaltoptionen (z.B. P-, R-, N-, D- Schaltoptionen) hinausgeht. Es ist des weiteren Aufgabe der vorliegenden Erfindung, eine Schalteinheit für ein automatisches Schaltgetriebe vorzustellen, welches Elemente einer Schaltkulissensymbolik aufweist, wobei diese Elemente der Schaltkulissensymbolik zur eindeutigen Anzeige einer vom Wählhebel angenommenen Stellung dienen. Es ist schließlich Aufgabe der vorliegenden Erfindung, eine Schalteinheit vorzustellen, welche eine sinnfällige Bedienung zuläßt.

Die obengenannten Aufgaben (Vorteile) sind erfindungsgemäß mit Hilfe einer Kulissenschalteinheit, welche die Merkmale des unabhängigen Anspruchs 1 aufweist gelöst. Mit Hilfe von Kulissenschalteinheiten, welche die Merkmale der abhängigen Ansprüche zusätzlich aufweisen, kann die Lösung zweckmäßig weiter ausgestaltet werden.

Erfindungsgemäß umfaßt eine Kulissenschalteinheit zur Erzeugung von Gangschaltsignalen für ein automatisches Schaltgetriebe eine Abdeckung der Kulissenschalteinheit, eine in der Abdeckung befindliche Kulisse, die Verschiebe- und/oder Schwenkbewegungen in eine Längs- und eine Querrichtung in der Ebene der Kulissenschalteinheit zuläßt, einen in der Kulisse gerührten, in die Längs- und in die Querrichtung verschiebbaren und/oder schwenkbaren Wählhebel, ein mit der Abdeckung verbundenes Gehäuse oder Trägerteil, sowie elektrische Schalterelemente (z.B. Schleifbahnen und Schleifkontakte oder Mikroschalter), wobei die elektrischen Schalterelemente elektrische Gangschaltsignale entsprechend der Verschiebung oder sonstige Bewegung des Wählhebels erzeugen, die zur Steuerung des automatischen Schaltgetriebes verwendet werden. Die Besonderheit der erfindungsgemäßen Kulissenschalteinheit besteht darin, daß die elektrischen Schalterelemente (z.B. Schleifbahnen und Schleifkontakte oder Mikroschalter) unmittelbar auf einem mit dem Gehäuse oder mit dem Trägerteil verbundenen, leitenden Element in Form einer Leiterplatte oder einer Leiterfolie angeordnet sind.

Das Wesen der vorliegenden Erfindung kann am Beispiel zweier bevorzugter Ausführungsformen der erfindungsgemäßen Kulissenschalteinheit verdeutlicht werden.

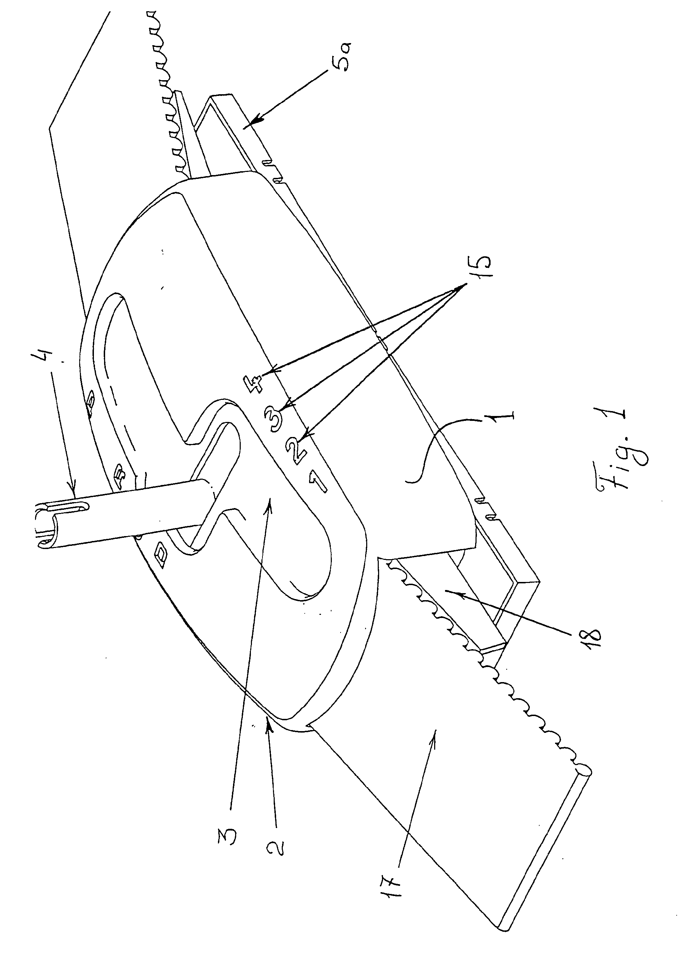

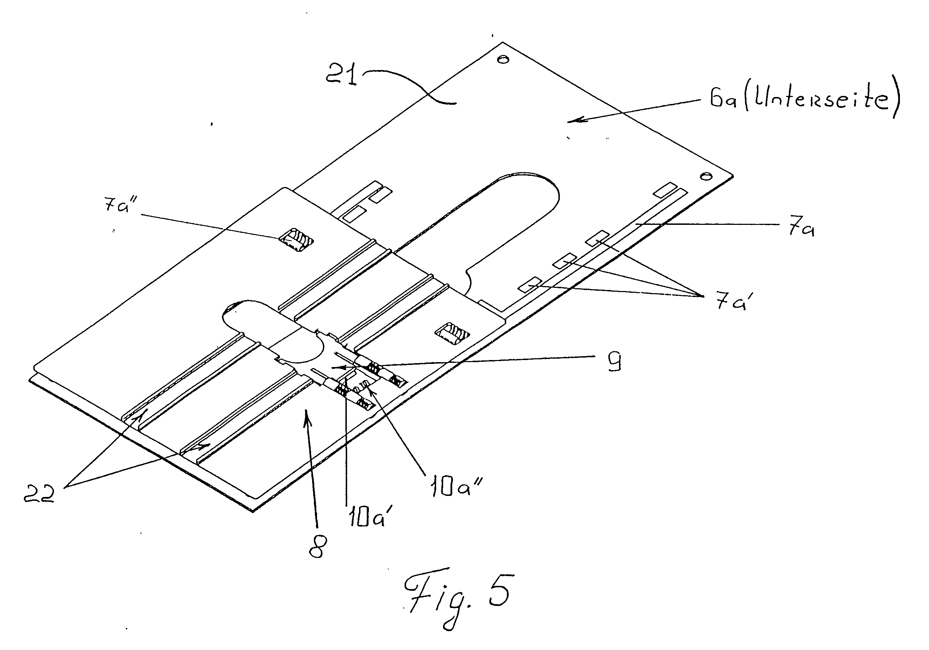

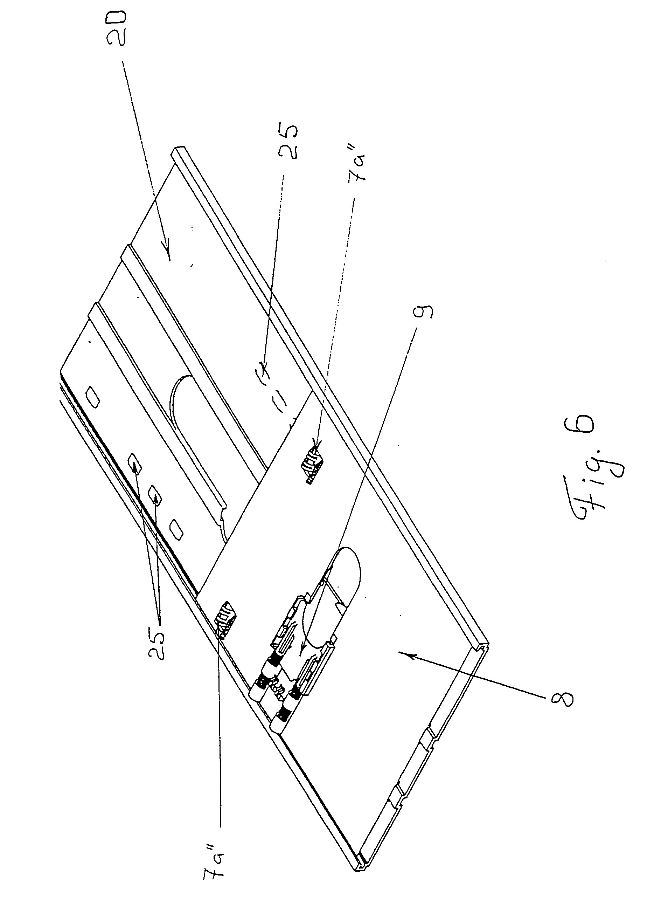

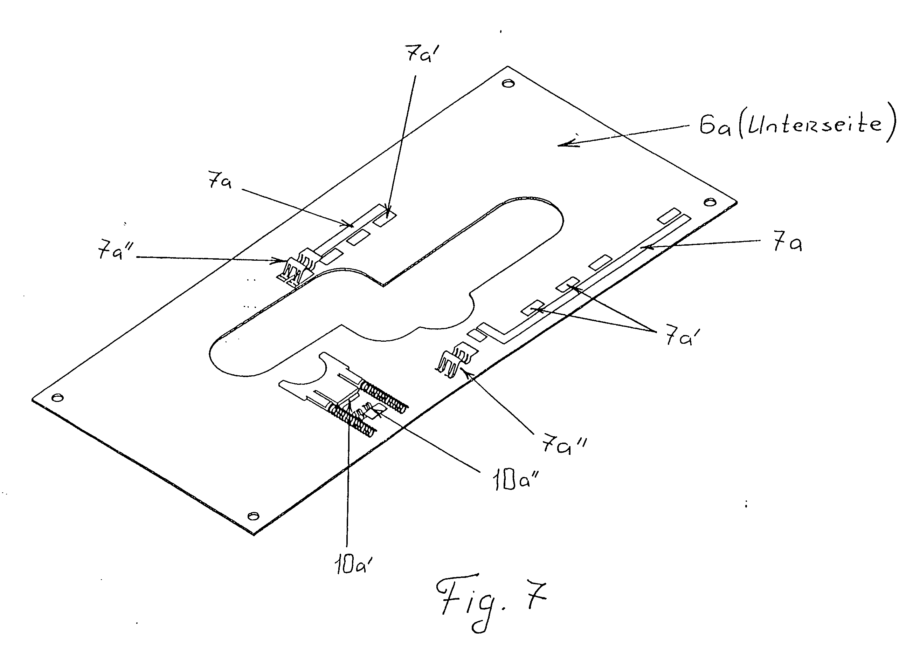

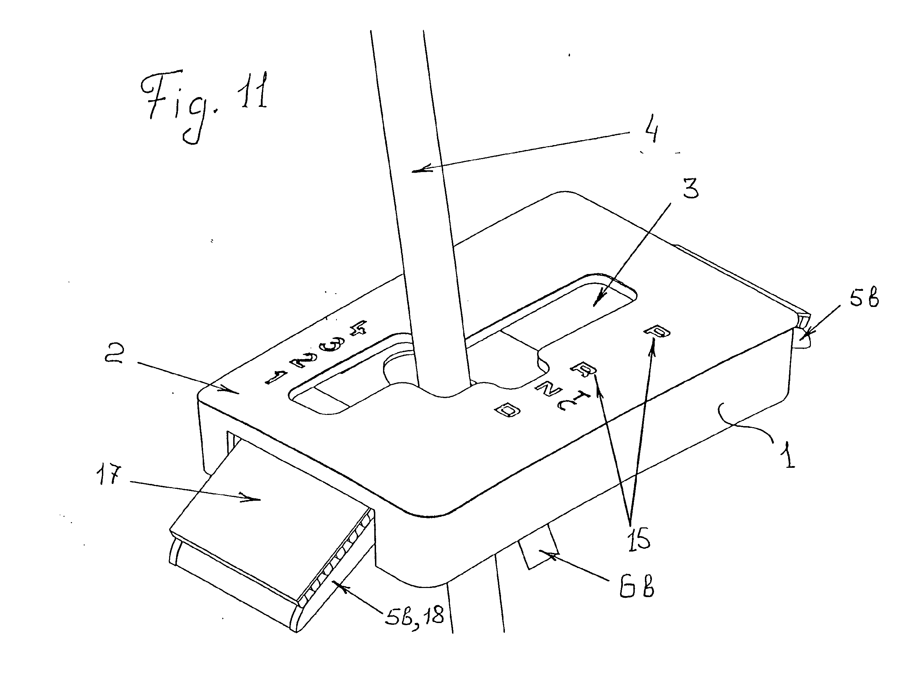

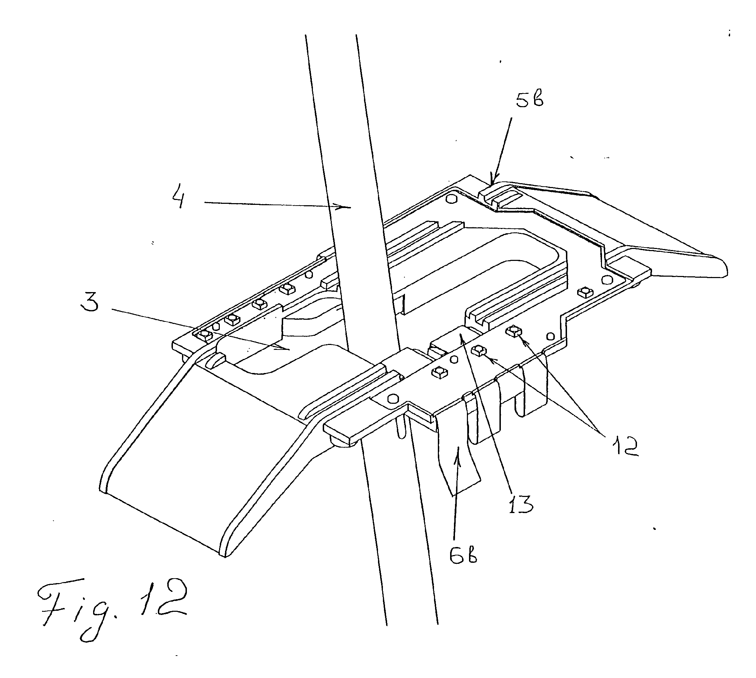

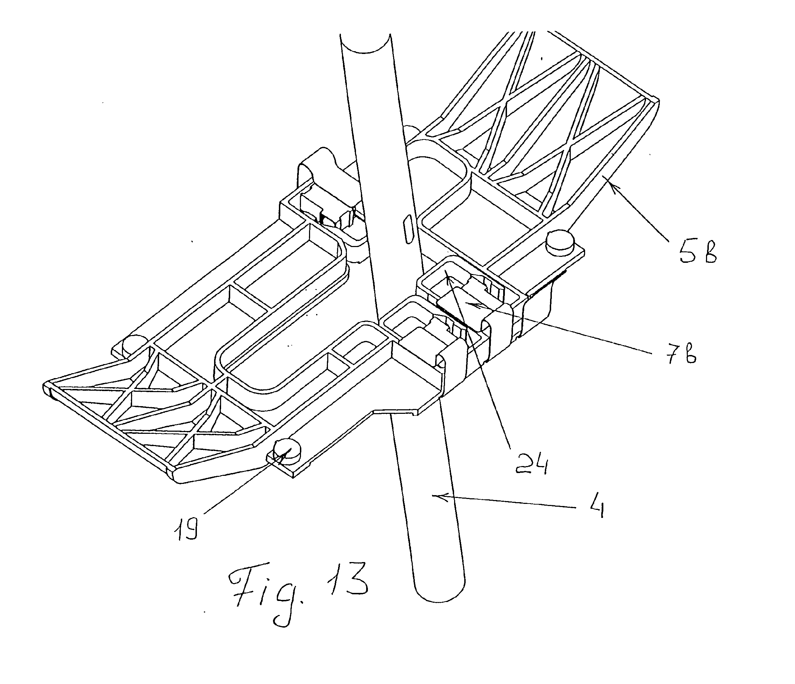

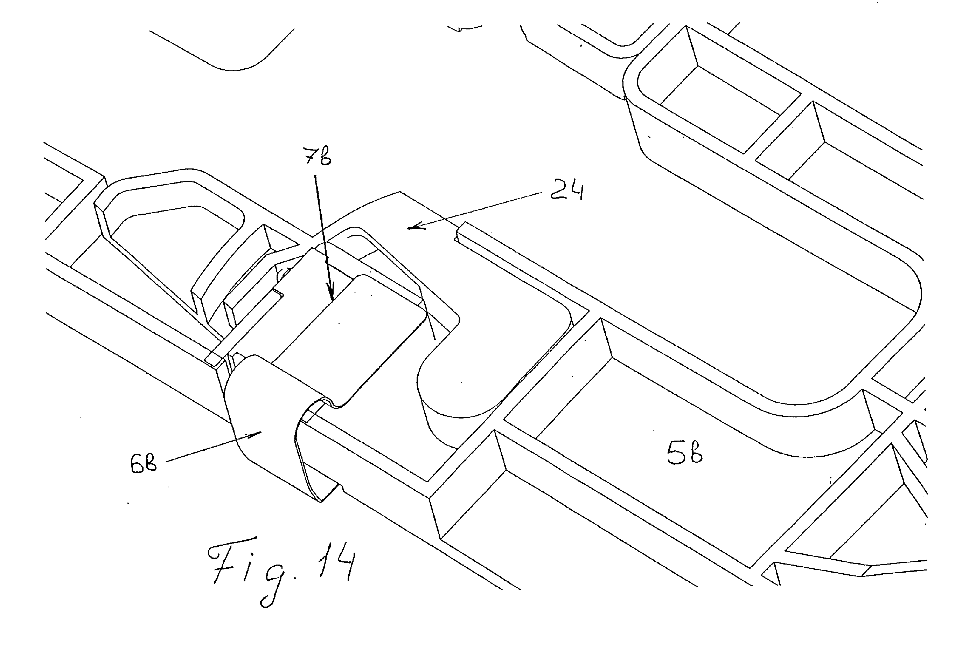

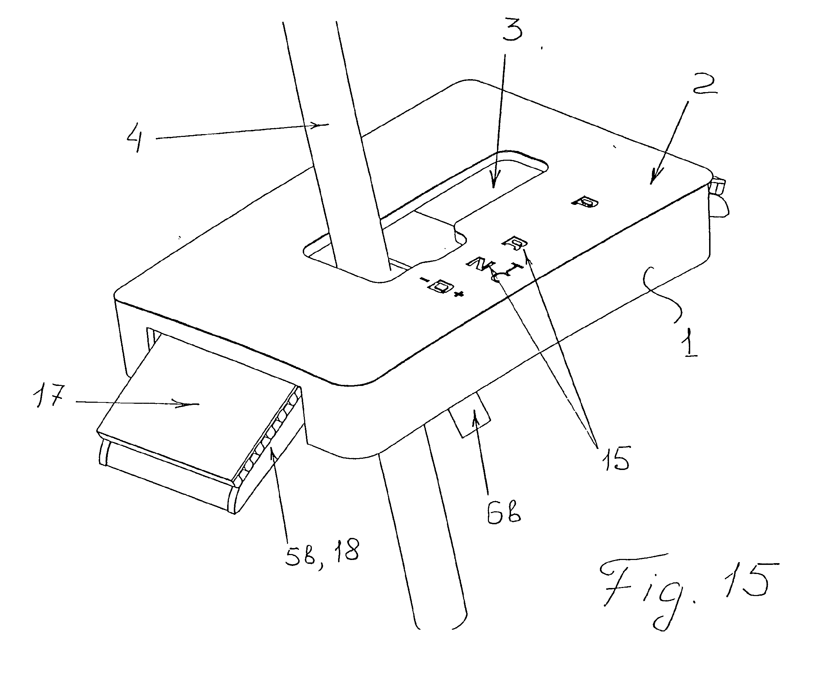

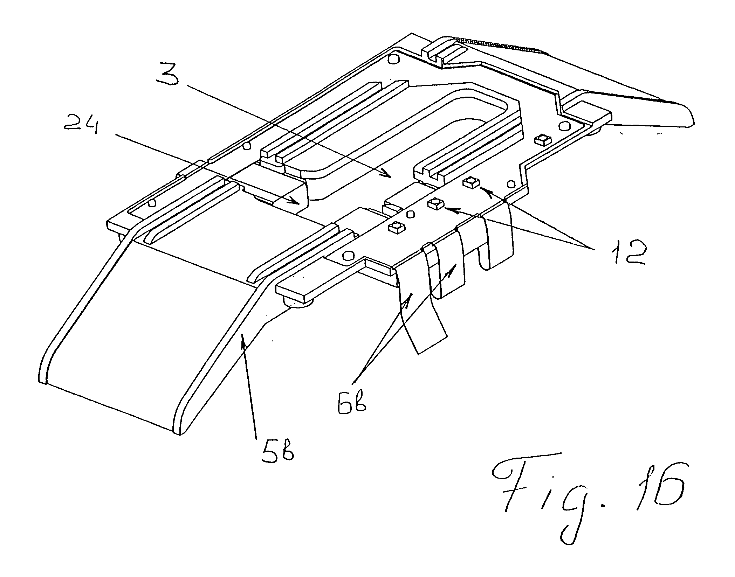

Die bevorzugten Ausführungsformen sind in der nachfolgenden Beschreibung und den zugehörigen Zeichnungen näher dargestellt, wobei die Figuren 1 bis 10 sich auf die erste Ausführungsform und die Figuren 11 bis 16 auf das zweite Ausführungsform der erfindungsgemäßen Kulissenschalteinheit beziehen. Diese Figuren zeigen:
Fig. 1 eine allgemeine Ansicht einer erfindungsgemäßen Kulissenschalteinheit,
Fig. 2 eine Kulissenschalteinheit ohne Abdeckung, Wählhebels und Jalousie,
Fig. 3 eine Draufsicht auf das Gehäuse der Kulissenschalteinheit,
Fig. 4 eine Draufsicht auf die Leiterplatte,
Fig. 5 eine Ansicht von unten auf die Leiterplatte, mit einer auf der Leiterplatte liegenden
Schieberplatte mit einem Querschieber,
Fig. 6 eine Draufsicht auf den Bodenteil mit der auf dem Bodenteil montierten
Schieberplatte (mit dem Querschieber),
Fig. 7 eine Ansicht von unten auf die Leiterplatte mit elektrischen Schalterelementen,
Fig. 8 eine Draufsicht auf den Querschieber,
Fig. 9 eine Ansicht von unten auf den Querschieber,
Fig. 10 eine Querschnitt des Bodenteils mit der auf dem Bodenteil montierten
Schieberplatte und dem Querschieber,
Fig. 11 eine allgemeine Ansicht einer zweiten Ausführungsform der erfindungsgemäßen Kulissenschalteinheit,
Fig. 12 die zweite Kulissenschalteinheit ohne Abdeckung, Wählhebel und Jalousie,
Fig. 13 eine Ansicht von unten auf einen Trägerteil mit einem in dem Trägerteil befindlichen Wählhebel,
Fig. 14 eine vergrößerte Darstellung eines Schalterelementes,
Fig. 15 eine allgemeine Ansicht eines weiteren Beispiels für die zweite Ausführungsform der erfindungsgemäßen Kulissenschalteinheit, und
Fig. 16 einem Trägerteil für die zweite Ausführungsform
Fig. 1 zeigt eine allgemeine Ansicht einer erfindungsgemäßen Kulissenschalteinheit (1).
Die Kulissenschalteinheit (1) umfaßt eine Abdeckung (2), ein in einer Kulisse (3) geführter Wählhebel (4) und ein Gehäuse (5a). Erfindungsgemäß läßt die Kulisse (3) die Verschiebeund/oder Schwenkbewegungen in eine Längs- und eine Querrichtung in der Ebene der Kulissenschalteinheit (1) zu.

Die Kulissenschalteinheit (1) kann des weiteren eine Jalousie (17) umfassen, welche unter der Abdeckung (2) auf einer Jalousieführung (18) geführt wird, wobei die Jalousie (18) vorwiegend zum Schutz der unter der Abdeckung (2) befindlichen Teilen der Kulissenschalteinheit (1) gegen Schmutz bzw. Staub und/oder Wassertropfen dienen. Die Abdeckung (2) der Kulissenschalteinheit (1) kann des weiteren auch eine Reihe von Elementen einer Schaltkulissensymbolik (15) aufweisen, wobei die Elemente der Schaltkulissensymbolik (15) zur Anzeige einer vom Wählhebel (4) angenommenen Stellung dienen.

Die erfindungsgemäße Kulissenschalteinheit (1) funktioniert auf folgende Weise. Durch Verschiebe- und/oder Schwenkbewegungen des Wählhebels (4) werden in der Fig. 1 nicht gezeigte elektrische Schalterelemente betätigt, wobei die elektrischen Schalterelemente elektrische Gangschaltsignale entsprechend der Verschiebung des Wählhebels (4) erzeugen, die zur Steuerung des automatischen Schaltgetriebes verwendet werden. Aus der Fig. 1 ist ersichtlich, daß der Wählhebel (4) in der Kulisse (3) in eine Längs- und eine Querrichtung in der Ebene der Kulissenschalteinheit (1) verschoben und/oder geschwenkt werden kann. Diese relativ umfangreiche Bewegungsfreiheit des Wählhebels (4), welche erfindungsgemäß durch eine spezifische Ausgestaltung von in der Figur 1 nicht gezeigten Schalttechniken ermöglicht wird, daß die Kulissenschalteinheit (1) neben den üblichen Schaltfunktionen (z.B. P-, R-, N-, D- Schaltoptionen) eine Reihe von zusätzliche Schaltoptionen (z.B. Optionen für eine "Tiptronic"- Getriebeschaltung oder Option für Getriebeuntersetzung für Geländefahrzeuge) ausführen kann. Des weiteren muß besonders betont werden, daß vorliegende Erfindung verschiedene Kulissenformen ermöglicht, wobei die Kulissenformen an die verschiedenen Fahrzeugtypen angepaßt werden können.

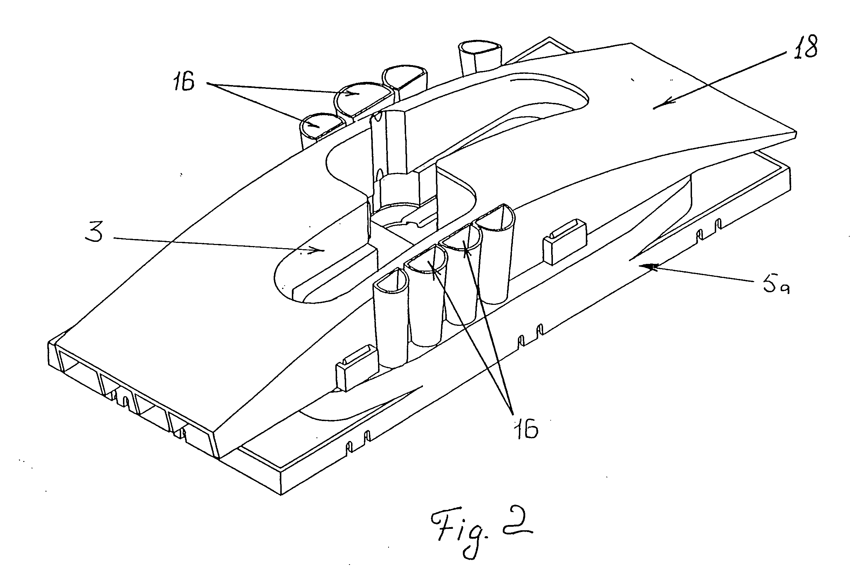

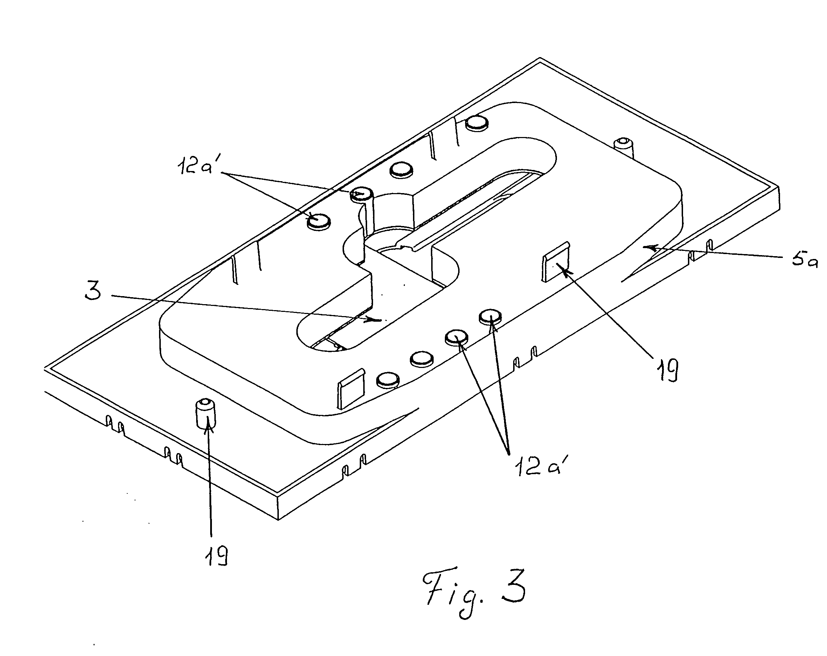

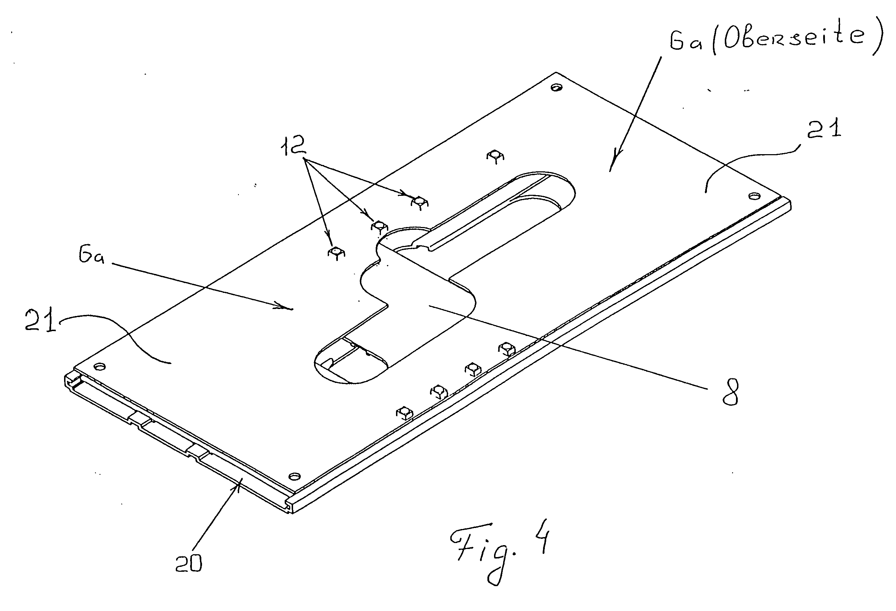

Fig. 2 zeigt die erfindungsgemäße Kulissenschalteinheit (1) ohne Abdeckung (2), Wählhebels (4) und Jalousie (17). Fig. 2 zeigt, daß die Jalousieführung (18) eine Reihe von Lichtschächten (16), welche zum Durchlassen des von in der Fig. 4 gezeigten Licht emittierenden Dioden (LEDs 12) erzeugten Lichts zur Beleuchtung der Elemente der Schaltkulissensymbolik (15) dienen, wobei jede Licht emittierende Diode (LED 12) einem bestimmten Lichtschacht zugeordnet ist. Im Unterschied zu konventionellen Beleuchtungstechniken, welche in heutzutage auf dem Markt vorhandenen Schalteinheiten verwendet wird, wird das Licht von den LEDs (12) nicht über meist relativ komplizierte und brüchige Plastik-Lichtleiter, sondern direkt über in der Fig. 3 gezeigte zylindrische Lichtleiter (12a') und die Lichtschächte (16) zu den Elementen der Schaltkulissensymbolik (15) geleitet. Durch solche Ausgestaltung der erfindungsgemäßen Kulissenschalteinheit (1) werden nicht nur die Herstellungskosten für die Herstellung (z.B. wegen Einfachheit bei der Montage) der Schalteinheit, sondern auch die Zuverlässigkeit in der Funktion der Schalteinheit gewährleistet.

Fig. 3 zeigt eine Draufsicht auf das Gehäuse (5a) der Kulissenschalteinheit (1). Das Gehäuse (5a) weist des weiteren auch eine Reihe von Montageelementen (19), welche für eine einfachere Montage der erfindungsgemäßen Kulissenschalteinheit (1) sorgen.

Die Figuren 4, 5 und 6 geben eine Vorstellung über einen wichtigen erfinderischen Aspekt der vorliegenden Erfindung. Erfindungsgemäß werden Gangschaltsignale, welche den Bewegungen des Wählhebels (4) in der Kulisse (3) der Kulissenschalteinheit (1) entsprechen, mit Hilfe einer in den Figuren 4 bis 6 näher abgebildeten Anordnung erzeugt. Diese Anordnung umfaßt eine Leiterplatte (6a), eine Schieberplatte (8) mit einem auf der Schieberplatte (8) positionierten Querschieber (9) und einen Bodenteil (20). Die Leiterplatte (8) weist eine Reihe von Schleifkontakten (7a') sowie ein oder mehrere Schleifbahnen (7a), welche bevorzugterweise auf die untere Seite der Leiterplatte (6a) angebracht sind. Die Leiterplatte (6a) weist des weiteren eine Reihe der Licht emittierenden Dioden (LEDs 12), welche bevorzugterweise durch Herstellung eines elektrischen Kontaktes zwischen der Schleifbahn (7a) und einem der mit dem LED (12) verbundenen Schleifkontakt (7a') angeschaltet wird. Die Herstellung der elektrischen Kontakte zwischen der Schleifbahn (7a) und den elektrischen Kontakten (7a') erfolgt mittels eines oder mehrerer Schleifer (7a"), die auf der Schieberplatte (8) angeordnet ist. Durch Bewegung der Schieberplatte (8) in die Richtung entlang der Leiterplatte (6a), wobei die Bewegung durch die auf der Schieberplatte (8) untergebrachte Längsführungen (22) bestimmt wird, wird auch der Schleifer (7a") entlang der Leiterplatte (6a) bewegt, wobei der Schleifer (7a") entsprechend in Kontakt mit unterschiedlichen Schleifkontakten (7a') kontaktiert und entsprechend elektrische Signale auf diesen Schleifkontakten (7a') erzeugt. Die auf den Schleifkontakten (7a') erzeugten elektrischen Signale werden zur Auswertung an die passiven elektrischen Elemente der Auswerteelektronik weitergeleitet, wobei diese Elemente bevorzugterweise auch auf der unteren Seite der Leiterplatte (z.B. in Bereichen (21)) montiert werden können, so daß die Notwendigkeit einer aufwendigen Verkabelung zwischen den Schalteinheiten und der Auswerteelektronik entfällt. Dadurch kann nicht nur die Einfachheit der Montage, sondern auch die Kompaktheit sowie die Zuverlässigkeit der Funktion der Kulissenschalteinheit (1) gewährleistet werden.

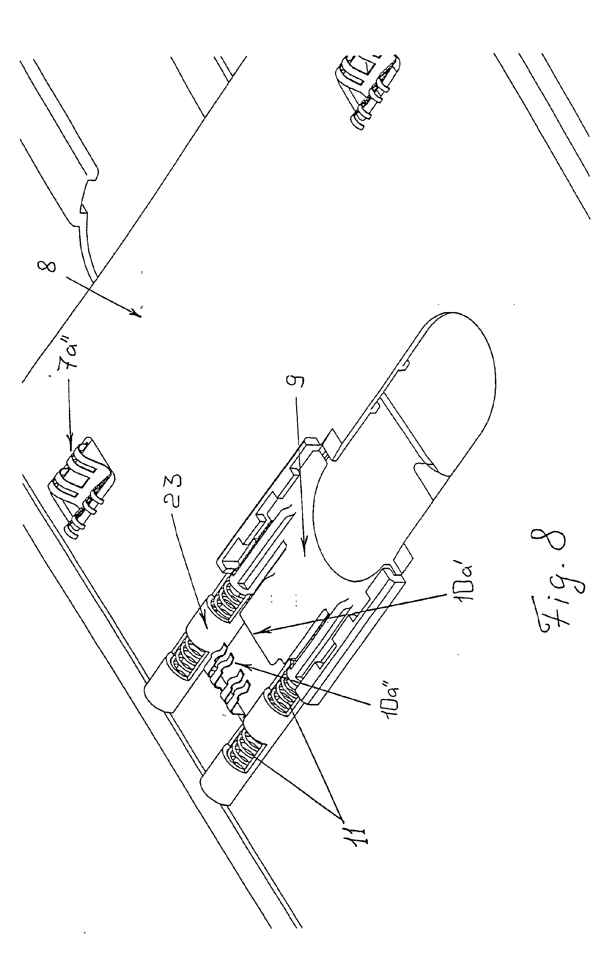

Um die Möglichkeit zu schaffen, die Bewegungen des Wählhebels (4) in die Querrichtung der Leiterplatte (6a) für die Erzeugung von Steuersignalen zu nutzen, ist an der Schieberplatte (8) ein Querschieber (9) vorgesehen, welcher in die Querrichtung der Leiterplatte (6a) verschoben werden kann. Der Querschieber (9) weist eine Betätigungsnase (10a') auf, die in elektrischen Kontakt mit Schaltsegmenten (10a") kommt, wenn der Querschieber durch eine Bewegung des Wählhebels (4) in die Querrichtung verschoben wird. Durch das Kontaktieren der Betätigungsnase (10a') mit den Schaltsegmenten (10a") werden elektrische Signale erzeugt, die der Querbewegung des Wählhebels (4) entsprechen und die für die weitere Auswertung an die Auswerteelektronik der Kulissenschalteinheit weitergeleitet werden. Der Querschieber (9) bewegt sich in der in Fig. 8 gezeigten Querschieberführungen (23), wobei in den Querschieberführungen eine oder mehrere Rückschaltfederungsvorrichtungen (11) dafür sorgen, daß beim Loslassen oder bei der Freigabe des Wählhebels (4) dieser in seine ursprüngliche Stellposition zurückkehrt.

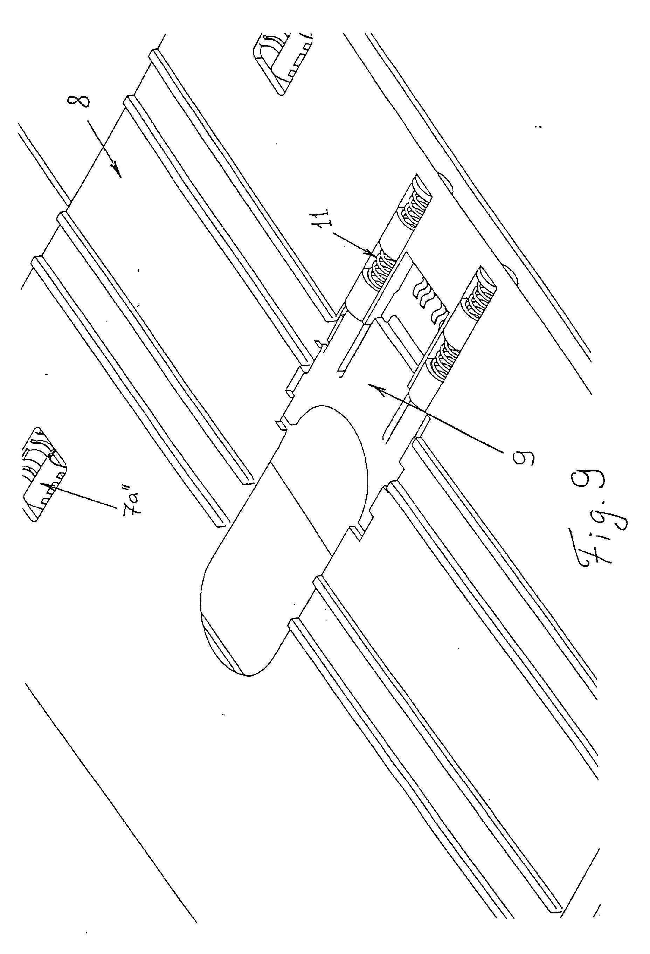

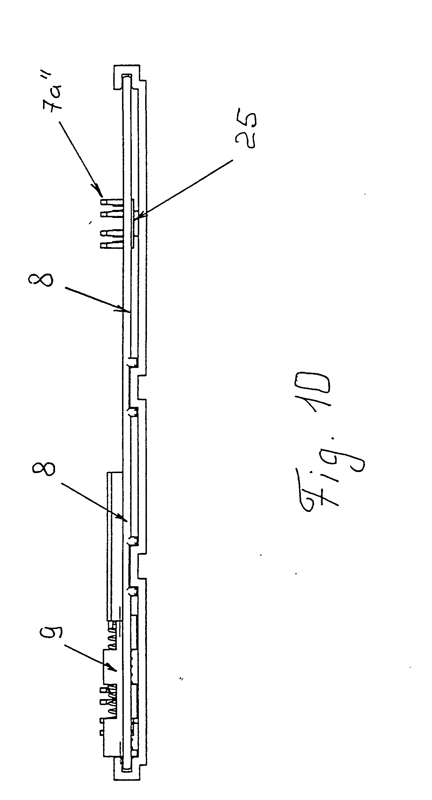

Als weitere Hilfe zum Verständnis des ersten Ausführungsbeispiels der erfindungsgemäßen Kulissenschaltvorrichtung (1) sind Figuren 9 und 10 sowie eine Liste der Bezugszeichen angeführt, die die in den Figuren eingeführten Bezeichnungen verdeutlichen.

Ein weiteres bevorzugtes Ausführungsbeispiel der erfindungsgemäßen Kulissenschalteinheit ist in den Fig. 11 bis 16 gezeigt.

Fig. 11 ist eine allgemeine Ansicht einer zweiten Ausführungsform der erfindungsgemäßen Kulissenschalteinheit (1), welche im wesentlichen gleiche Merkmale mit der in Fig. 1 gezeigten bevorzugten Ausführungsform aufweist.

Ein wesentlicher Unterschied der in der Fig. 11 gezeigten Kulissenschalteinheit (1) besteht darin, daß das leitende Element nicht in Form einer Leiterplatte (6a), sondern in Form einer Leiterfolie (6b) ausgeführt ist, wobei die Leiterfolie (6b) aus leitenden Bahnen besteht, die auf einen Folienträger aufgetragenen oder in das Folienträger integrierten sind.

Ein weiterer Unterschied der zweiten Ausführungsform besteht darin, daß die elektrischen Schalterelemente nicht in Form von Schleifkontakten (7a,7a',7a"), sondern in Form von Mikroschaltern (7b) ausgeführt sind. Die Mikroschalter (7b) werden auf der Leiterfolie (6b) appliziert, wobei die Mikroschaltern (7b) durch Verschnappen oder mittels anderer geeigneter Befestigungsmethode in ihrer bestimmten Lage auf der Leiterfolie (6b) fixiert werden.

Das Gemeinsame an beiden Ausführungsformen der Fig. 1 und Fig. 11 ist, daß die elektrischen Schalterelemente (7a,7a' oder 7b) jeweils unmittelbar auf dem leitenden Element, also auf der Leiterfolie (6b) bzw. auf der Leiterplatte (6a) angeordnet sind, wodurch die dieser Erfindung zugrunde liegenden Aufgaben (Vermeidung einer aufwendigen Verkabelung, Kompaktheit der Kulissenschalteinheit, einfache Montage etc.) gelöst werden.

Vor den Mikroschaltern (7b) sind (geeignet geformte) Schiebeelemente (24) in Schienen und/oder Führungen eingebaut, die auf dem in Trägerteil (5b) integriert sind. Die Konstruktion und die Position der Schiebeelemente (24) ist so ausgewählt, daß die Mikroschalter (7b) bei Ruhestellung des Wählhebels (4) unbetätigt bleiben.

Bei Auslenkung des Wählhebels (4) in Richtung eines Mikroschalters (7b) wird das Schiebeelement (24) ebenfalls mitbewegt. Über die Innenkontur des Schiebeelements (24) wird der Mikroschalter (7b) betätigt und ein Signal an die Auswerteelektronik der Kulissenschalteinheit (1) weitergeleitet. Die Rückstellung des Wahlhebels (4) und des Schiebeelements (24) erfolgt mittels einer Feder, mit welcher außerdem durch das Schalten verursachte Geräusche (Klappern in die Ruhelage) verhindert werden.

Weitere Einzelheiten der Ausgestaltung der Kulissenschalteinheit (1) gemäß dem zweiten Ausführungsbeispiel können den Fig. 11 bis 16 entnommen werden, wobei wiederum Bezug auf die Liste der Bezugszeichen genommen wird und wobei Teile mit vergleichbaren Funktionen gleiche Bezugsziffern aufweisen.

### Liste der Bezugszeichen:

1. Kulissenschalteinheit
2. Abdeckung
3. Kulisse (Aussparungen in der Abdeckung etc.)
4. Wählhebel
5a. Gehäuse
5b. Trägerteil
6a. Leiterplatte
6b. Leitende Folie
7a. Schleifbahnen
7a'. Schleifkontakte
7a". Schleifer
7b. Mikroschalter
8. Schieberplatte
9. Querschieber
10a'. Betätigungsnase
10a". Schaltsegment
10a'., 10a". Elektrische Schaltelemente, die durch den Querschieber betätigt werden
11. Rückschaltfederungsvorrichtung
12. Licht emittierende Dioden (LEDs)
12a'zylindrische Lichtleiter
13. Schieberelement
14. Führungen und/oder Schienen
15. Elemente der Schaltkulissensymbolik
16. Lichtschacht
17. Jalousie
18. Jalousieführung
19. Montageelemente
20. Bodenteil
21. Bereiche der Leiterplatte (6a) für Bestückung mit passiven elektronischen Elementen einer Auswerteelektronik
22. Längsführungen
23. Querschieberführungen
24. Schieberelement
25. Prägung auf dem Bodenteil (20)

## Patentansprüche

1. Eine Kulissenschalteinheit (1) zur Erzeugung von Gangschaltsignalen für ein automatisches Schaltgetriebe, die umfaßt:
- eine Abdeckung (2) der Kulissenschalteinheit (1),
- eine in der Abdeckung (2) befindliche Kulisse (3), die Verschiebe- und/oder Schwenkbewegungen in eine Längs- und eine Querrichtung in der Ebene der Kulissenschalteinheit (1) zuläßt,
- einen in der Kulisse (3) geführten, in die Längs- und in die Querrichtung verschiebbaren und/oder schwenkbaren Wählhebel (4),
- ein mit der Abdeckung (2) verbundenes Gehäuse (5a) oder Trägerteil (5b), und
- elektrische Schalterelemente (z.B. Schleifbahnen 7a und Schleifkontakte 7a' oder Mikroschalter 7b), wobei die elektrischen Schalterelemente elektrische Gangschaltsignale entsprechend der Verschiebung des Wählhebels (4) erzeugen, die zur Steuerung des automatischen Schaltgetriebes verwendet werden,
**dadurch gekennzeichnet, daß** die elektrischen Schalterelemente (z.B. Schleifbahnen 7a und Schleifkontakte 7a' oder Mikroschalter 7b) unmittelbar auf einem mit dem Gehäuse (5a) oder mit dem Trägerteil (5b) verbundenen, leitenden Element in Form einer Leiterplatte (6a) oder einer Leiterfolie (6b) angeordnet sind.

2. Eine Kulissenschalteinheit (1) nach Anspruch 1, **dadurch gekennzeichnet, daß** das leitende Element in Form einer Leiterplatte (6a) ausgeführt ist.

3. Eine Kulissenschalteinheit (1) nach Anspruch 2, **dadurch gekennzeichnet, daß** die elektrischen Schalterelemente zumindest teilweise in Form von Schleifkontakten (7a') und Schleifbahnen (7a) ausgeführt sind, wobei die Schleifkontakte (7a') unmittelbar auf der Leiterplatte (6a) angeordnet sind und durch auf der Leiterplatte (6a) befindliche Schleifbahnen (7a) und durch Schaltsegmente (7a"), welche sich auf einer in die Längsrichtung der Kulissenschalteinheit (1) mittels des Wählhebels (4) verschiebbaren Schieberplatte (8) befinden, kontaktiert sind.

4. Eine Kulissenschalteinheit (1) nach Anspruch 3, **dadurch gekennzeichnet, daß** die Schieberplatte (8) unter der Leiterplatte (6a) positioniert ist und die Schleifbahnen (7a) sich auf der unteren Seite der Leiterplatte (6a) befinden.

5. Eine Kulissenschalteinheit (1) nach Anspruch 3 oder 4, **dadurch gekennzeichnet, daß** die längsverschiebbare Schieberplatte (8) einen quer zur Kulissenschalteinheit (1) verschiebbaren Querschieber (9) aufweist, welcher sich durch eine Bewegung des Wählhebels (4) in diese Querrichtung verschieben läßt, wobei der Querschieber (9) zur Kontaktierung von weiteren elektrischen Schalterelementen (z.B. 10a', 10a") bestimmt ist.

6. Eine Kulissenschalteinheit (1) nach Anspruch 5, **dadurch gekennzeichnet, daß** der Querschieber (9) eine Rückschaltfederungsvorrichtung (11) aufweist, welche eine Rückkehr des Wählhebels (4) in eine neutrale Ruhestellung gewährleistet.

7. Eine Kulissenschalteinheit (1) nach einem der Ansprüche 2 bis 6, **dadurch gekennzeichnet, daß** die Kulissenschalteinheit (1) elektronische Elemente zur Auswertung der durch die elektrischen Schalterelemente (7a, 7a'; 10a, 10a'; 7b) erzeugten elektrischen Signale aufweist, wobei die Auswerteelektronik unmittelbar auf der Leiterplatte (6a) untergebracht ist.

8. Eine Kulissenschalteinheit (1) nach Anspruch 1, **dadurch gekennzeichnet, daß** das leitende Element in Form einer leitenden Folie (6b) ausgeführt ist.

9. Eine Kulissenschalteinheit (1) nach Anspruch 8, **dadurch gekennzeichnet, daß** die elektrischen Schaltelemente in Form von Mikroschaltern (7b) ausgeführt sind.

10. Eine Kulissenschalteinheit (1) nach Anspruch 8, **dadurch gekennzeichnet, daß** die Kulissenschalteinheit (1) ein oder mehrere geformte Schiebeelemente (13) aufweist, die vor dem Mikroschalter (7b) in auf dem Trägerteil (5b) integrierten Schienen und/oder Führungen (z.B. 14) so eingebaut sind, daß die Mikroschalter in einer Ruhestellung des Wählhebels (4) unbetätigt bleiben.

11. Eine Kulissenschalteinheit (1) nach Anspruch 8, **dadurch gekennzeichnet, daß** die Betätigung eines Mikroschalters (7b) über eine Innenkontur des Schiebeelements (13) erfolgt.

12. Eine Kulissenschalteinheit (1) nach einem der vorhergehenden Ansprüche, **dadurch gekennzeichnet, daß** die Abdeckung (2) der Kulissenschalteinheit (1) Elemente einer Schaltkulissensymbolik (15) aufweist, wobei die Elemente der Schaltkulissensymbolik (15) zur Anzeige einer vom Wählhebel (4) angenommenen Stellung dienen.

13. Eine Kulissenschalteinheit (1) nach Anspruch 12, **dadurch gekennzeichnet, daß** die Kulissenschalteinheit (1) in Form von Licht emittierenden Dioden (LEDs 12) ausgeführte Lichtquellen aufweist, welche zur Beleuchtung der Elemente der Schaltkulissensymbolik (15) dienen.

14. Eine Kulissenschalteinheit (1) nach. Anspruch 12, **dadurch gekennzeichnet, daß** die Kulissenschalteinheit (1) Lichtschächte (16) aufweist, welche zum Durchlassen des von den Licht emittierenden Dioden (LEDs 12) erzeugten Lichts zur Beleuchtung der Elemente der Schaltkulissensymbolik (15) dienen, wobei jede Licht emittierende Diode (LED 12) einem bestimmten Lichtschacht zugeordnet ist.
